# EUROPEAN PATENT SPECIFICATION

(11) **EP 3 394 301 B1**
(45) Date of publication and mention of the grant of the patent: **25.09.2019**
(21) Application number: 16822489.7
(22) Date of filing: 16.12.2016
(51) Int. Cl.: C22B 3/20, C22B 3/44, C22B 26/20

(54) **REMOVAL OF GYPSUM FROM LEACH SOLUTION**
ENTFERNUNG VON GIPS AUS EINER LAUGENLÖSUNG
ÉLIMINATION DU GYPSE DANS UN LIXIVIAT

(30) Priority: 21.12.2015 FI 20155981
(43) Date of publication of application: 31.10.2018
(73) Proprietor: Outotec (Finland) Oy, 02230 Espoo (FI)
(72) Inventor: LAITALA, Hannu, 02700 Kauniainen (FI)
(74) Representative: Seppo Laine Oy
(86) International application number: PCT/FI2016/050886
(87) International publication number: WO 2017/109278

(56) References cited:
- EP-A1- 0 408 092
- WO-A1-01/07370

## Description

### TECHNICAL FIELD

The exemplary and non-limiting embodiments relate generally to leaching of metals, and more particularly to removal of gypsum from calcium-containing leach solution.

### BACKGROUND ART

Leaching of metals such as Cu, Zn, Co and Ni may be carried out in a sulphate solution by means of sulphuric acid. If calcium is present in feed material or if calcium containing chemicals are used for pH control in the process, gypsum is formed during the process. The solubility of gypsum in the sulphate solution is quite low, so calcium present in a leach solution may be precipitated as gypsum. The precipitating gypsum disturbs the production process in several ways, e.g. by causing equipment and pipeline blockages and by reducing energy and production efficiencies because of scaling.

Outotec Gypsum Removal Plant (online brochure, September 2014) discloses a solution for controlled gypsum removal from leach solutions. Typically used in zinc, copper, and nickel refineries, gypsum removal is achieved by cooling the solution and precipitating the gypsum into particles suitable for thickening to avoid the problem of gypsum scaling in process pipes and other equipment in later process steps.

US2004089103 A1 discloses a method for removing calcium from a sulfate solution in the zinc production process. Calcium is removed as an an-hydrate from the raw solution coming from concentrate or ore leaching before the solution purification stages.

WO2013068645 A1 discloses a method for leaching a sulfidic metal concentrate in hydrometallurgical production of metal in a leaching process from which e.g. gypsum is separated from the acid solution. The acid solution is warmed up to an elevated temperature by bringing off-gas of the leaching step into direct contact with the acid solution.

US2006117908 A1 discloses a process comprising providing a pregnant leach solution comprising copper values, wherein one or more heat exchangers are utilized to raise the extraction temperature of the pregnant leach solution. The heat exchangers transfer heat from a lean electrolyte exiting an electrowinning stage to the pregnant leach solution.

US4475771 A discloses a method of recovering boric acid from a subterranean deposit of colemanite ore by solution mining, wherein the separation of gypsum from the regenerated HCI comprises passing the products of the sulfuric acid addition step through a thickener and filter.

WO01/07370 A1 discloses a method for removing sulphates from an aqueous feedstock.

### SUMMARY

An object is thus to provide a method to solve the above problems. The object is achieved by a method as defined in the independent claim. Preferred embodiments are disclosed in the dependent claims.

A method for removing gypsum from calcium-containing material is disclosed, the method comprising cooling a calcium-containing pregnant leach solution by indirectly contacting the calcium-containing pregnant leach solution with a gypsum-depleted pregnant leach solution to obtain a cooled pregnant leach solution; cooling the cooled pregnant leach solution in a cooling device to obtain a further cooled pregnant leach solution; and precipitating gypsum from the further cooled pregnant leach solution to obtain the gypsum-depleted pregnant leach solution.

In another aspect, a system is disclosed for removing gypsum from calcium-containing material, the system comprising a heat exchanger for cooling a calcium-containing pregnant leach solution by indirectly contacting the calcium-containing pregnant leach solution with a gypsum-depleted pregnant leach solution to obtain a cooled pregnant leach solution; a cooling device for cooling the cooled pregnant leach solution to obtain a further cooled pregnant leach solution; and a thickener for precipitating gypsum from the further cooled pregnant leach solution to obtain the gypsum-depleted pregnant leach solution.

The method enhances removal of gypsum from the sulphate solution.

### BRIEF DESCRIPTION OF THE DRAWINGS

In the following the solution will be described in greater detail by means of preferred embodiments with reference to the attached drawings, in which
Figure 1 illustrates an existing gypsum precipitation process;
Figure 2 illustrates a gypsum precipitation process according to an exemplary embodiment.

### DETAILED DESCRIPTION OF SOME EMBODIMENTS

Uncontrolled gypsum precipitation is a challenge in solvent extraction (SX) processes. Gypsum content in the feed solution to the solvent extraction process may cause additional maintenance expenses and equipment downtime, as well as lead to a lower standard end product from the solvent extraction. Thus gypsum removal may be used before the solvent extraction process. With gypsum removal before the solvent extraction, the maintenance expenditure and downtime of solvent extraction plants may be reduced and a higher product quality may be achieved. After a high-temperature reactor leach, gypsum precipitation causes equipment failure and crud formation in the solvent extraction process.

A cooling tower design may be used as part of a gypsum removal circuit. By reducing the temperature of pregnant leach solution (PLS) to below the solubility point, gypsum is precipitated prior to the solvent extraction process. After gypsum removal, the temperature of the solution is adjusted for the solvent extraction process needs. The cooling tower design may be based on computational flow dynamics (CFD) modelling to find the optimal structure and to estimate the cooling efficiency and behaviour of the tower. A horizontal airflow allows optimal droplet separation in demisters, resulting in cooling efficiency combined with optimized drift loss.

A forced-draught solution cooling tower design may be used to cool down slurry coming from leaching to copper solvent extraction. Applications in which the solution cooling towers are used include, but are not limited to, spent electrolyte cooling, gypsum removal, and chloride removal, and solutions cooled in solution cooling towers contain sulphuric acid, solid particles, copper, cobalt, and/or zinc sulphate at high concentration causing scaling and other process problems inside the equipment.

In a solution cooling tower, gas is introduced into the tower from the lower part of the tower and travels upwards, interacting with solution droplets that are falling down from the upper part of the tower. Some of the droplets are caught in the airflow travelling upwards through the tower, especially smaller droplets. As airflow exits the tower, it travels through the demisters. There may be two layers of demisters: a coarse demister and a fine demister to remove the droplets, i.e. minimize the drift loss.

Gypsum is white in its pure form; usually the colour of gypsum varies according to metal components present in the solution. Gypsum is formed from calcium, sulphuric acid, and water (CaSO₄ · 2H₂O). In acidic solutions, if the temperature rises above 90°C, the gypsum tends not to form if the solution becomes oversaturated. Instead of gypsum, anhydrite (CaSO₄) is formed. Gypsum has many uses in construction, and it is also used as a fertilizer and soil conditioner. However, gypsum recovered from hydrometallurgical processes is not necessarily clean enough to be used in these applications. Gypsum produced by hydrometallurgical processes may contain precipitated components and is usually stored in waste areas. Calcium is soluble in acidic solutions and is present as CaSO₄. The solubility of calcium is dependent on the temperature of the solution, with solubility increasing with increasing temperature. In water, CaSO₄ solubility increases slightly with rising temperatures and reaches its maximum at approximately 50°C, then starts to decrease. As H₂SO₄ is present in the solution, the solubility of calcium sulphate increases, but after a certain point it starts to diminish. Other solution parameters affecting the solubility of CaSO₄ are the concentration of certain metal ions in the solution, such as Zn and Fe.

Gypsum causes several kinds of problems in the solvent extraction process. For example, calcium-saturated pregnant leach solution (PLS) may increase crud formation and precipitate on the cooler surfaces of the equipment, and cause scaling on picket fences and agitators. Crud is a stable emulsion containing an organic and an aqueous solution and solid particles. The type and cause of crud differs between the operation plants. Fine gypsum particles increase crud formation, and problems occur especially when crud accumulates on the picket fences in the settler. The calcium-saturated solution causes gypsum scaling on the surfaces of equipment. Gypsum on the agitators directly increases power consumption. Gypsum precipitate may force a plant to shut down for maintenance and gypsum removal.

The operating principle of a gypsum removal circuit is based on the decrease in the solubility of gypsum when the temperature of the solution is lowered. The temperature is lowered so that gypsum is precipitated out of solution to the point where the risk of gypsum precipitation in the solvent extraction is substantially reduced. The precipitated gypsum may be efficiently removed from the solution using a high rate thickener and the overflow used in solvent extraction. After the thickener, the solution is reheated back to the SX temperature. In some cases, part of the gypsum underflow from the thickener is recycled to act as a seed for gypsum precipitation.

With the cooling tower design, it is possible to direct the slurry straight from leaching to the cooling tower and then perform a simultaneous solid separation for leach residue and gypsum in the thickener after the cooling tower. Thus it is possible for the gypsum to precipitate on the solid particles of the leach residue.

In the sulphate solutions, most of the calcium is precipitated according to the following reactions:

Ca²⁺ + SO₄²⁻ + 2H₂O -> CaSO₄ · 2H₂O

(temperature < 130°C),

2Ca²⁺ + 2SO₄²⁻ + H₂O -> 2CaSO₄ · ½H₂O

(130°C < temperature < 160°C).

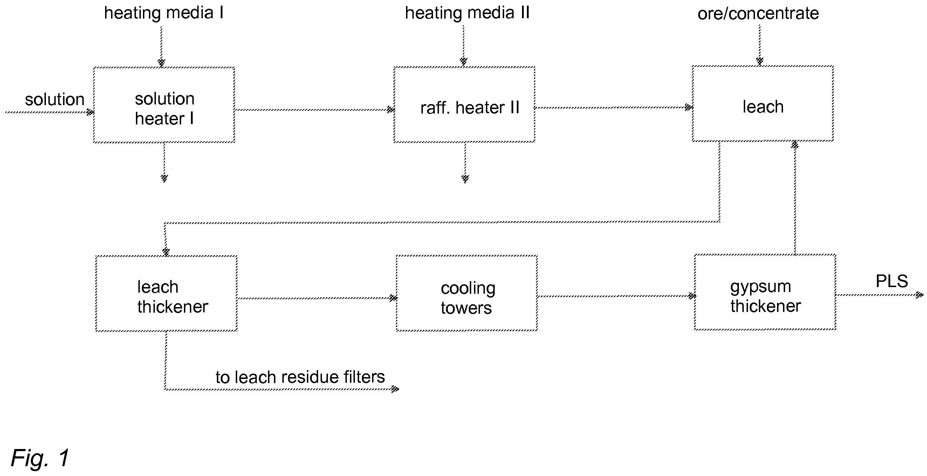

Gypsum may be removed with a separate cooling tower where gypsum is precipitated by cooling incoming liquid. However, as the precipitation is carried out from low solid concentration liquid, precipitated gypsum is of low quality. For example, small particle size makes the gypsum slimy and sticky. Figure 1 illustrates an existing gypsum precipitation process. In the situation of Figure 1, the heat energy of the cooling tower's feed solution is wasted, wherein more energy is needed to heat up the sulphate solution before leaching.

In an exemplary embodiment, gypsum is precipitated from solids-containing sulphate solution, wherein a coarse gypsum precipitate is obtained that is easy to filter. An exemplary process connection comprises a heat exchanger for heating Ca-containing PLS before the Ca-containing PLS enters the cooling tower. Thus, the heat exchanger is configured to remove heat energy from the Ca-containing PLS, and transfer the removed heat energy to the gypsum depleted PLS. The pregnant leach solution thus obtained is gypsum under-saturated, so that cooling down of the pregnant leach solution by a few degrees in a further process step does not cause more precipitation of gypsum. The pregnant leach solution contains the dissolved metal ions of the metal(s) that is (are) being leached (obtained from ore/concentrate used as a feed material).

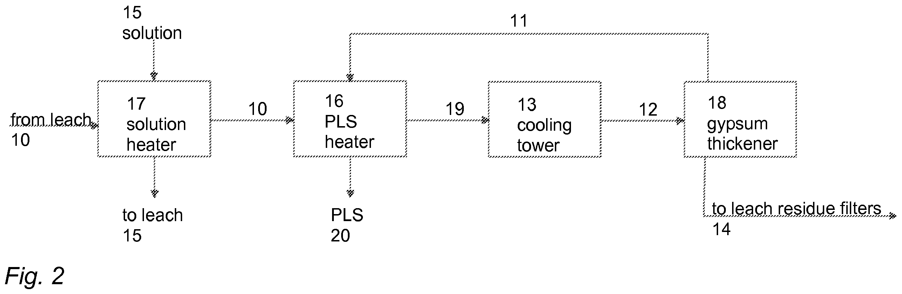

Figure 2 illustrates a system for removing gypsum from calcium-containing material. In Figure 2, a calcium-containing pregnant leach solution 10 is cooled by indirectly contacting the calcium-containing pregnant leach solution 10 with a gypsum-depleted pregnant leach solution 11, wherein a cooled pregnant leach solution 19 is obtained. The cooled calcium-containing pregnant leach solution 19 is then further cooled in a cooling device 13, wherein a further cooled pregnant leach solution 12 is obtained. Gypsum is precipitated from the further cooled pregnant leach solution 12, wherein said gypsum-depleted pregnant leach solution 11 and a leach residue (slurry) are obtained. The pregnant leach solution obtained is gypsum under-saturated. The cooling device 13 may comprise a cooling tower.

The calcium-containing pregnant leach solution 10 may be obtained by leaching calcium-containing material, such as ore and/or concentrate, in a sulphate solution. Alternatively, the calcium-containing pregnant leach solution 10 may be obtained when pH of a sulphate solution is adjusted with calcium-containing material. Before cooling the calcium-containing pregnant leach solution 10 by indirectly contacting the calcium-containing pregnant leach solution 10 with the gypsum-depleted pregnant leach solution 11, the calcium-containing pregnant leach solution 10 may be pre-cooled by indirectly contacting the calcium-containing pregnant leach solution 10 with incoming leach solution 15. The pre-cooling of the calcium-containing pregnant leach solution 10 by indirectly contacting the calcium-containing pregnant leach solution 10 with the incoming leach solution 15 may be carried out in a solution heater 17.

Gypsum precipitates from the further cooled pregnant leach solution 12, wherein a slurry 14 containing precipitated gypsum and the gypsum-depleted pregnant leach solution 11 are obtained. Gypsum may then be recovered from the slurry 14, for example, by filtering the precipitated gypsum from the slurry 14 in a filter.

The system comprises a second heat exchanger 16, wherein the cooling of the calcium-containing pregnant leach solution 10 by indirectly contacting the calcium-containing pregnant leach solution 10 with the gypsum-depleted pregnant leach solution 11 is carried out in the second heat exchanger 16. The temperature of the calcium-containing pregnant leach solution 10 entering the second heat exchanger is preferably 40 °C to 90 °C, more preferably 55 °C to 90 °C. The temperature of the cooled pregnant leach solution 19 exiting the second heat exchanger is preferably 40 °C to 85 °C, more preferably 50 °C to 85 °C. The temperature of the gypsum-depleted pregnant leach solution 11 entering the second heat exchanger is preferably 30 °C to 35 °C. The temperature of a re-heated gypsum-depleted pregnant leach solution 20 exiting the second heat exchanger is preferably 30 °C to 43 °C, more preferably 40 °C to 43 °C.

Gypsum may be precipitated from the further cooled pregnant leach solution 12 by thickening the cooled pregnant leach solution 12. The thickening of the further cooled pregnant leach solution may be carried out in a gypsum thickener 18. The metal that is being leached, ends up as dissolved metal ions in the re-heated gypsum-depleted pregnant leach solution 20 exiting the second heat exchanger.

The term indirectly contacting as used herein refers to one medium not being in direct contact with another. The term indirectly contacting may refer to one medium being separated from another e.g. by a solid wall to prevent mixing of the media. The indirect contact, however, enables efficient heat transfer from one medium to another.

In an exemplary embodiment, the heat energy of the leach solution may also be used to heat up the incoming sulphate solution, wherein less energy is needed to heat up the sulphate solution before leaching.

An exemplary embodiment simplifies the process equipment required. Process operability may also be improved, and process production costs may be lowered. The wasting of the heat energy of the cooling tower's feed solution may be avoided.

It will be obvious to a person skilled in the art that, as the technology advances, the inventive concept can be implemented in various ways. The invention and its embodiments are not limited to the examples described above but may vary within the scope of the claims.

## Claims

1. A method for removing gypsum from calcium-containing material, wherein the method comprises
cooling a cooled pregnant leach solution (19) in a cooling device (13) to obtain a further cooled pregnant leach solution (12);
precipitating gypsum from the further cooled pregnant leach solution (12) to obtain a gypsum-depleted pregnant leach solution (11);
**characterized in that** the method comprises
cooling a calcium-containing pregnant leach solution (10) by indirectly contacting the calcium-containing pregnant leach solution (10) with the gypsum-depleted pregnant leach solution (11) to obtain the cooled pregnant leach solution (19);
the method comprising obtaining the calcium-containing pregnant leach solution (10)
by leaching the calcium-containing material in a sulphate solution, or
by adjusting pH of the sulphate solution with the calcium-containing material;
wherein the step of cooling the calcium-containing pregnant leach solution (10) by indirectly contacting the calcium-containing pregnant leach solution (10) with the gypsum-depleted pregnant leach solution (11) is carried out in a heat exchanger (16), wherein
the temperature of the calcium-containing pregnant leach solution (10) entering the heat exchanger (16) is 40 °C to 90 °C;
the temperature of the cooled pregnant leach solution (19) exiting the heat exchanger (16) is 40 °C to 85 °C;
the temperature of the gypsum-depleted pregnant leach solution (11) entering the heat exchanger (16) is 30 °C to 35 °C;
the temperature of the gypsum-depleted pregnant leach solution (20) exiting the heat exchanger (16) is 30 °C to 43 °C.

2. The method according to claim 1, wherein the temperature of the calcium-containing pregnant leach solution (10) entering the heat exchanger (16) is 55 °C to 90 °C.

3. The method according to claim 1, wherein the temperature of the cooled pregnant leach solution (19) exiting the heat exchanger (16) is 50 °C to 85 °C.

4. The method according to claim 1, wherein the temperature of the gypsum-depleted pregnant leach solution (20) exiting the heat exchanger (16) is 40 °C to 43 °C.

5. A method according to claim 1, wherein
before cooling the calcium-containing pregnant leach solution (10) by indirectly contacting the calcium-containing pregnant leach solution (10) with the gypsum-depleted pregnant leach solution (11),
the method comprises
pre-cooling the calcium-containing pregnant leach solution (10) by indirectly contacting the calcium-containing pregnant leach solution (10) with incoming leach solution (15).

6. A method as claimed in claim 5, wherein the step of pre-cooling the calcium-containing pregnant leach solution (10) by indirectly contacting the calcium-containing pregnant leach solution (10) with the incoming leach solution (15) is carried out in a solution heater (17).

7. A method as claimed in any one of the preceding claims, the method comprising precipitating gypsum from the further cooled pregnant leach solution (12) to obtain a slurry (14) containing gypsum.

8. A method as claimed in claim 7, the method comprising recovering gypsum from the slurry (14) by filtering gypsum from the slurry (14) in a filter.

9. A method as claimed in any one of the preceding claims, wherein the cooling device (13) comprises a cooling tower.

10. A method as claimed in any one of the preceding claims, the method comprising precipitating gypsum from the further cooled pregnant leach solution (12) by thickening the cooled pregnant leach solution (12).

11. A method as claimed in claim 10, wherein the thickening of the further cooled pregnant leach solution (12) is carried out in a thickener (18).

## Patentansprüche

1. Verfahren zum Entfernen von Gips aus calciumhaltigem Material, wobei das Verfahren umfasst
Kühlen einer gekühlten Frischlaugenlösung (19) in einer Kühlvorrichtung (13), um eine weiter gekühlte Frischlaugenlösung (12) zu erhalten;
Fällen von Gips aus der weiter gekühlten Frischlaugenlösung (12), um eine gipsdepletierte Frischlaugenlösung (11) zu erhalten;
**dadurch gekennzeichnet, dass** das Verfahren umfasst
Kühlen einer calciumhaltigen Frischlaugenlösung (10) durch indirektes Inkontaktbringen der calciumhaltigen Frischlaugenlösung (10) mit der gipsdepletierten Frischlaugenlösung (11), um die gekühlte Frischlaugenlösung (19) zu erhalten;
das Verfahren umfassend ein Erhalten der calciumhaltigen Frischlaugenlösung (10)
durch Auslaugen des calciumhaltigen Materials in eine Sulfatlösung oder
durch Einstellen des pH-Werts der Sulfatlösung mit dem calciumhaltigen Material;
wobei der Schritt des Kühlens der calciumhaltigen Frischlaugenlösung (10) durch indirektes Inkontaktbringen der calciumhaltigen Frischlaugenlösung (10) mit der gipsdepletierten Frischlaugenlösung (11) in einem Wärmetauscher (16) ausgeführt wird, wobei
die Temperatur der calciumhaltigen Frischlaugenlösung (10), die in den Wärmetauscher (16) eintritt, 40 °C bis 90 °C beträgt;
die Temperatur der gekühlten Frischlaugenlösung (19), die aus dem Wärmetauscher (16) austritt, 40 °C bis 85 °C beträgt;
die Temperatur der gipsdepletierten Frischlaugenlösung (11), die in den Wärmetauscher (16) eintritt, 30 °C bis 35 °C beträgt;
die Temperatur der gipsdepletierten Frischlaugenlösung (20), die aus dem Wärmetauscher (16) austritt, 30 °C bis 43 °C beträgt.

2. Verfahren nach Anspruch 1, wobei die Temperatur der calciumhaltigen Frischlaugenlösung (10), die in den Wärmetauscher (16) eintritt, 55 °C bis 90 °C beträgt.

3. Verfahren nach Anspruch 1, wobei die Temperatur der gekühlten Frischlaugenlösung (19), die aus dem Wärmetauscher (16) austritt, 50 °C bis 85 °C beträgt.

4. Verfahren nach Anspruch 1, wobei die Temperatur der gipsdepletierten Frischlaugenlösung (20), die aus dem Wärmetauscher (16) austritt, 40 °C bis 43 °C beträgt.

5. Verfahren nach Anspruch 1, wobei
vor dem Kühlen der calciumhaltigen Frischlaugenlösung (10) durch indirektes Inkontaktbringen der calciumhaltigen Frischlaugenlösung (10) mit der gipsdepletierten Frischlaugenlösung (11)
das Verfahren umfasst
Vorkühlen der calciumhaltigen Frischlaugenlösung (10) durch indirektes Inkontaktbringen der calciumhaltigen Frischlaugenlösung (10) mit eingehender Laugenlösung (15).

6. Verfahren nach Anspruch 5, wobei der Schritt des Vorkühlens der calciumhaltigen Frischlaugenlösung (10) durch indirektes Inkontaktbringen der calciumhaltigen Frischlaugenlösung (10) mit der eingehenden Laugenlösung (15) in einem Lösungserhitzer (17) ausgeführt wird.

7. Verfahren nach einem der vorstehenden Ansprüche, das Verfahren umfassend ein Fällen von Gips aus der weiter gekühlten Frischlaugenlösung (12), um eine Schlämme (14) mit Gips zu erhalten.

8. Verfahren nach Anspruch 7, das Verfahren umfassend ein Rückgewinnen von Gips aus der Schlämme (14) durch Filtern von Gips aus der Schlämme (14) in einem Filter.

9. Verfahren nach einem der vorstehenden Ansprüche, wobei die Kühlvorrichtung (13) einen Kühlturm umfasst.

10. Verfahren nach einem der vorstehenden Ansprüche, das Verfahren umfassend ein Fällen von Gips aus der weiter gekühlten Frischlaugenlösung (12) durch Verdicken der gekühlten Frischlaugenlösung (12).

11. Verfahren nach Anspruch 10, wobei das Verdicken der weiter gekühlten Frischlaugenlösung (12) in einem Verdicker (18) ausgeführt wird.

## Revendications

1. Procédé d'élimination de gypse d'un matériau contenant du calcium, dans lequel le procédé comprend
le refroidissement d'une solution de lixiviation mère refroidie (19) dans un dispositif de refroidissement (13) pour obtenir une autre solution de lixiviation mère refroidie (12) ;
la précipitation du gypse de l'autre solution de lixiviation mère refroidie (12) pour obtenir une solution de lixiviation mère appauvrie en gypse (11) ;
**caractérisé en ce que** le procédé comprend
le refroidissement d'une solution de lixiviation mère (10) contenant du calcium en mettant en contact directement la solution de lixiviation mère (10) contenant du calcium avec la solution de lixiviation mère appauvrie en gypse (11) afin d'obtenir la solution de lixiviation mère refroidie (19) ;
le procédé comprenant l'obtention de la solution de lixiviation mère (10) contenant du calcium
en lixiviant le matériau contenant du calcium dans une solution de sulfate ou
en ajustant le pH de la solution de sulfate avec le matériau contenant du calcium ;
dans lequel l'étape de refroidissement de la solution de lixiviation mère (10) contenant du calcium par mise en contact indirecte de la solution de lixiviation mère (10) contenant du calcium avec la solution de lixiviation mère appauvrie en gypse (11) est effectuée dans un échangeur de chaleur (16), dans lequel
la température de la solution de lixiviation mère (10) contenant du calcium entrant dans l'échangeur de chaleur (16) est de 40 °C à 90 °C ;
la température de la solution de lixiviation mère refroidie (19) sortant de l'échangeur de chaleur (16) est de 40 °C à 85 °C ;
la température de la solution de lixiviation mère appauvrie en gypse (11) entrant dans l'échangeur de chaleur (16) est de 30 °C à 35 °C ;
la température de la solution de lixiviation mère appauvrie en gypse (20) sortant de l'échangeur de chaleur (16) est de 30 °C à 43 °C.

2. Procédé selon la revendication 1, dans lequel la température de la solution de lixiviation mère (10) contenant du calcium entrant dans l'échangeur de chaleur (16) est de 55 °C à 90 °C.

3. Procédé selon la revendication 1, dans lequel la température de la solution de lixiviation mère refroidie (19) sortant de l'échangeur de chaleur (16) est de 50 °C à 85 °C.

4. Procédé selon la revendication 1, dans lequel la température de la solution de lixiviation mère appauvrie en gypse (20) sortant de l'échangeur de chaleur (16) est de 40 °C à 43 °C.

5. Procédé selon la revendication 1, dans lequel :
avant de refroidir la solution de lixiviation mère (10) contenant du calcium par mise en contact indirecte de la solution de lixiviation mère (10) contenant du calcium avec la solution de lixiviation mère appauvrie en gypse (11),
le procédé comprend
le pré-refroidissement de la solution de lixiviation mère (10) contenant du calcium par mise en contact indirecte de la solution de lixiviation mère (10) contenant du calcium avec la solution de lixiviation entrante (15).

6. Procédé selon la revendication 5, dans lequel l'étape de pré-refroidissement de la solution de lixiviation mère (10) contenant du calcium par mise en contact indirecte de la solution de lixiviation mère (10) contenant du calcium avec la solution de lixiviation entrante (15) est effectuée dans un dispositif de chauffage de solution (17).

7. Procédé selon l'une quelconque des revendications précédentes, le procédé comprenant la précipitation du gypse de l'autre solution de lixiviation mère refroidie (12) pour obtenir une suspension (14) contenant du gypse.

8. Procédé selon la revendication 7, le procédé comprenant la récupération de gypse de la suspension (14) par filtration du gypse de la suspension (14) dans un filtre.

9. Procédé selon l'une quelconque des revendications précédentes, dans lequel le dispositif de refroidissement (13) comprend un tour de refroidissement.

10. Procédé selon l'une quelconque des revendications précédentes, le procédé comprenant la précipitation du gypse de l'autre solution de lixiviation mère refroidie (12) par épaississement de la solution de lixiviation mère refroidie (12).

11. Procédé selon la revendication 10, dans lequel l'épaississement de l'autre solution de lixiviation mère refroidie (12) est effectuée dans un épaississeur (18).
